Europäisches Patentamt

European Patent Office

Office européen des brevets

(19)

(11) Publication number: **0 140 951**
**B1**

# (12) EUROPEAN PATENT SPECIFICATION

(45) Date of publication of patent specification: **12.04.89**

(21) Application number: **84901831.2**

(22) Date of filing: **24.04.84**

(86) International application number:
**PCT/SE84/00151**

(87) International publication number:
**WO 84/04371 08.11.84 Gazette 84/26**

(51) Int. Cl.⁴: **F 16 H 25/08**

(54) **LINEAR ACTUATOR WITH TELESCOPICALLY VARIABLE LENGTH.**

(30) Priority: **25.04.83 SE 8302312**

(43) Date of publication of application:
**15.05.85 Bulletin 85/20**

(45) Publication of the grant of the patent:
**12.04.89 Bulletin 89/15**

(84) Designated Contracting States:
**AT BE CH DE FR GB LI LU NL**

(56) References cited:
**DE-A-2 219 524**
**GB-A-2 089 929**
**US-A-3 404 580**
**US-A-3 592 070**

(73) Proprietor: **SVENSSON, Ingemar**
**Benzelsväg 22**
**S-443 00 Lerum (SE)**

(72) Inventor: **SVENSSON, Ingemar**
**Benzelsväg 22**
**S-443 00 Lerum (SE)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

The present invention relates to a linear actuator for telescopic extension and retraction movement, comprising a number of elongated tubular members which are axially movable relative to and into each other. Such a linear actuator may be used e.g. for transmitting movement from a rotary drive source to a desired point located at a distance from said drive source to produce a linear movement, like a jack.

A linear actuator with a plurality of elongated tubular members of the above mentioned kind is known from DE—A—2 219 524. This actuator comprises nut elements which have thread elements engaging said thread means in order to extend and respectively to contact the actuator by rotation of a drive shaft relative to at least one tubular member. Hereby the outer tubular member is driven by the drive shaft whereas the upper end of this outer tubular member has a nut which engages a thread on the outer surface of the adjacent inner tubular member. This member similarly to the design of the outer tubular member has a nut at its upper end which engages a central spindle like rod. With this construction it cannot be defined exactly which tubular member will move when the drive shaft is being rotated. This depends on the fact that whether the inner spindle like rod is fixed against rotation or not as well as on the friction engagement conditions between the adjacent tubular members.

From US—A—3 404 580 it is known to simultaneously extend two tubular members of a ball screw actuator relative to a central drive shaft. The simultaneous shifting movement of the tubular members is only possible by holding a nut against rotation.

It is the object underlying the present invention to provide a linear actuator of the above mentioned kind which is compact and simple in construction with few complicated parts and can reliably transmit forces over a considerable stroke length.

This object is achieved by the means indicated in claim 1.

According to the present invention upon driving the drive shaft all movable tubes simultaneously axially move outwardly.

With the features of the subclaims additional advantages with the respect to the operability of the actuator are achieved.

The invention is described below by way of a preferred embodiment example, with reference to the accompanying drawings, in which

Figure 1 is a schematic longitudinal section through the linear actuator shown in the retracted state, and

Figure 2 shows in detail part of the linear actuator.

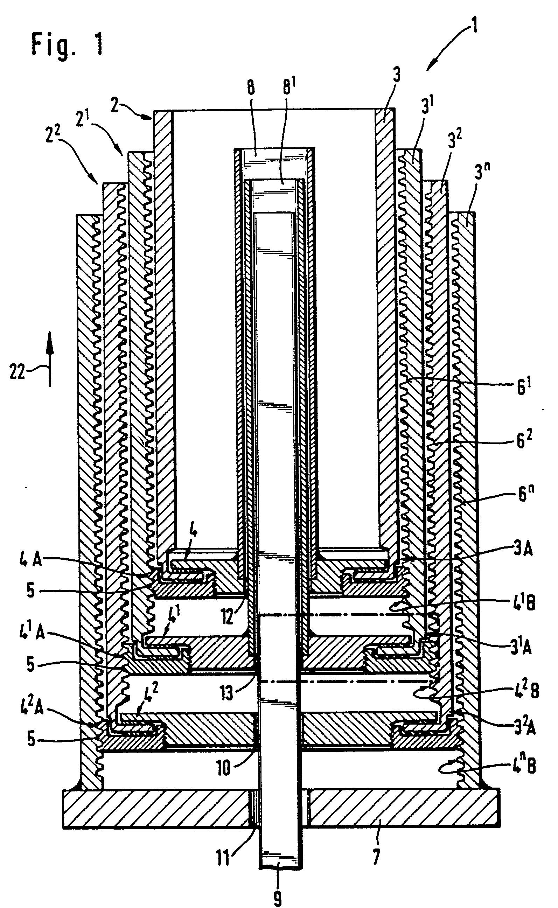

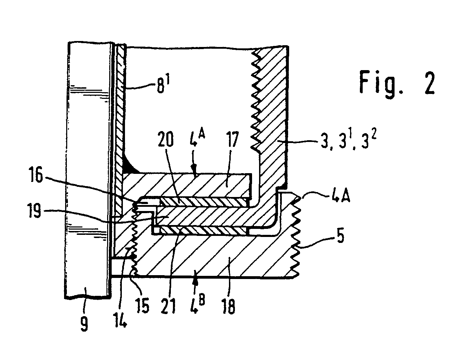

The linear actuator constructed according to the invention, which is shown in Figures 1 and 2 and which is designated by the numeral 1, comprises a plurality of mutually coaxial influencing members 2, $2^1$, $2^2$, etc., which preferably consist of a tube 3, $3^1$, $3^2$ etc. with a nut element 4, $4^1$, $4^2$ etc. connected rotatably to one of their ends 3A, $3^1$A, $3^2$A, etc., for example. The nut elements 4, $4^1$, $4^2$ have outer thread elements 5 along their respective outer casing surface 4A, $4^1$A, $4^2$A, while a number of the tubes $2^1$, $2^2$ have an internal thread means $6^1$, $6^2$ (inwardly facing thread means) along their inner casing surfaces $4^1$B, $4^2$B. A further tube $3^n$, which has only an inner thread means $6^n$, is securely connected to a motor baseplate 7.

A plurality of shafts 8, $8^1$, etc. which have a non-circular cross-section part, preferably formed by four-sides tube or having some other irregular circumferential shape, are connected non-rotatably to each other or to a main rotary drive shaft 9 thereby forming a shaft device. Expediently, the majority of the said shafts are connected, for example by welding, to an associated nut element 4, $4^1$, while the drive shaft 9 extends freely through a shaft passage aperture 10 adapted to the shape of the drive shaft 9 at the nut element $4^2$ which is located nearest to the motor baseplate 7, in order to effect rotation of the said nut element $4^2$. A hole 11 which is larger than the maximum cross-section of the drive shaft 9 extends through the motor baseplate 7 and enables the drive shaft 9 to rotate without being obstructed by the baseplate 7. Shaft passageways 12 and 13 at the nut elements 4 and $4^1$ also allow shafts 8, $8^1$, 9 received therein to move freely.

The nut elements 4—$4^2$ may consist of two halves $4^A$ and $4^B$ respectively which can be connected to each other by connecting means which may consist of threads 14 and 15 respectively, and after being connected together they can be locked by means of adhesive for example. In the connected state an intervening space 16 is formed between the two half-nuts $4^A$ and $4^B$, between a flange 17 or 18 respectively projecting in the radial direction from each half-nut. The said intervening space 16 is designed to receive a part 19, preferably an annular flange 19 extending radially relative to the axial direction of the tube on an associated tube 3—$3^2$ which can be connected thereto. Expediently, friction-reducing elements 20 and 21 respectively are provided on either planar face of the said flange 19, for example a suitable coating of some kind, so that a sliding bearing area is formed on either side of the said flange 19 and facilitates rotary movement between the tubes 3—$3^2$ and the nut elements 4—$4^2$ connected to them.

In order that the tubes 3—$3^2$ do not rotate relative to each other, the tubes which are connected to an adjoining tube are connected via a rotation-preventing device; however, this is not shown on the drawings. This may consist for example of a longitudinal keyway on one of the tubes with a spline mounted on the other tube and able to enter into the said keyway and be displaced along it when the associated nut element 4—$4^2$ is rotated.

The functioning of the above-described actuator which can be used for transmitting movement from a rotary drive source to a desired point located at a distance from the said drive source to produce linear movement, like a jack, is as follows: When the nut element $4^2$ is screwed upwards in the direction of the arrow 22, for example, under the effect of the drive shaft 9 and co-action with the passage 10, the associated tube $3^2$ is positioned with the nut element $4^1$ on the said nut element $4^2$. As the drive is continued, the nut elements $4—4^2$ are screwed in the direction of the arrow 22, causing a rising movement to occur with the next tube, etc., so that a stroke-length of substantially four times the structural length is possible with the example shown. Based on the drawing, the said stroke-length amounts to approximately 470 mm, with an overall structural height of only 140 mm. If it is desired to increase the stroke-length, all the tubes are made the same overall length, thus increasing the structural height by 30 mm. If it is desired to have a completely level state for the structural height then each tube is reduced in stroke-length by the thickness (10 mm) of the nut lying below, which gives a stroke-length of approximately 560 mm.

## Claims

1. A linear actuator for telescopic extension and retraction movement, comprising

a number of elongated tubular members (3, $3^1$, $3^2$, $3^n$) which are axially movable relative to and into each other and have inwardly facing thread means, one of these tubular members functioning as a reaction member ($3^n$) which is kept stationary and

nut elements (4, $4^1$, $4^2$), which have thread elements (5) engaging said thread means in order to extend and respectively to contact the actuator (1) by rotation of a drive shaft (9) which extends axially in the center of the actuator (1) and through a central opening (10, 13, 12) in each nut element, wherein

each nut element (4, $4^1$, $4^2$) is associated rotatably with one end (3A, $3^1$A, $3^2$A) of that tubular member (tube) (3, $3^1$, $3^2$) which is to be moved relatively to the adjacent tube ($3^1$, $3^2$, $3^n$), and

the drive shaft (9) is drivingly connected to said nut elements while partially engaging with a center of a telescopically shaft device (8, $8^1$), the shafts of which being connected to an associated nut element (4, $4^1$),

whereby rotation of the drive shaft (9) in one direction screws all movable tubes (3, $3^1$, $3^2$) which are connected to the nut elements (4, $4^1$, $4^2$) simultaneously axially outwardly to extend the actuator, and rotation of said drive shaft (9) in the opposite direction screws all these movable tubes inwardly one within the other adjacent tubes ($3^1$, $3^2$, $3^n$).

2. An actuator according to claim 1, characterized in that the nut elements are made in two parts forming therebetween an intervening space (16) between two radial flanges (17, 18) held spaced apart from one another, said space accommodating a flange part (19) of one of said movable tubes so that it can rotate relative to the nut element.

3. An actuator according to claim 2, characterized in that friction-reducing means (20, 21) are positioned in the intervening space (16) on either side of the said flange part (19).

4. An actuator according to either of claims 2 to 3, characterized in that the two parts of the nut element have connecting means (14, 15), preferably threads (14, 15) which can co-act with each other, by means of which the parts ($4^A$, $4^B$) can be connected together, for securing subsequently.

5. An actuator according to any of the preceding claims, characterized in that adjoining tubes are connected together via a rotation-preventing projecting spline connected to one of the tubes and able to be received in a longitudinal keyway on the other tube.

6. An actuator according to any of the preceding claims, characterized in that the shaft device comprises four-sided tubes (8, $8^1$) received one inside the other and that the drive shaft (9) is drivingly connected to the inner one of said four-sided tubes.

## Patentansprüche

1. Linearer Stellantrieb für eine telescopische Aus- und Einfahrbewegung, der umfaßt:

eine Anzahl von länglichen rohrförmigen Bauteilen (3, $3^1$, $3^2$, $3^n$), die mit Bezug zueinander sowie ineinander axial bewegbar sind und einwärts gerichtete Gewindegänge haben, wobei eines dieser rohrförmigen Bauteile als ein Gegenwirkungsbauteil ($3^n$) arbeitet, das ortsfest gehalten ist, und

Mutterbauteile (4, $4^1$, $4^2$), die mit den Gewindegängen in Eingriff befindliche Gewindeelemente haben, um den Stellantrieb (1) durch eine Drehung einer axial im Zentrum des Stellantriebs (1) sowie durch eine mittige Öffnung (10, 13, 12) in jedem Mutterbauteil sich erstreckende Antriebswelle (9) auszufahren bzw. zusammenzuziehen, wobei

jedes Mutterbauteil (4, $4^1$, $4^2$) drehbar mit dem einen Ende (3A, $3^1$A, $3^2$A) des rohrförmigen Bauteils (3, $3^1$, $3^2$), das mit Bezug zur benachbarten Röhre bewegt werden soll, gekoppelt ist und

die Antriebswelle (9) antriebsseitig mit den Mutterbauteilen verbunden ist, während sie teilweise mit einem Zentrum einer ausziehbaren Welleneinrichtung (8, $8^1$), deren Wellen mit einem zugeordneten Mutterbauteil (4, $4^1$) verbunden sind, in Eingriff ist,

wobei eine Drehung der Antriebswelle (9) in der einen Richtung alle bewegbaren Röhren (3, $3^1$, $3^2$), die mit den Mutterelementen (4, $4^1$, $4^2$) verbunden sind, gleichzeitig axial auswärts schraubt, um den Stellantrieb auszufahren, und eine Drehung der Drehwelle (9) in der entgegengesetzten Richtung alle diese bewegbaren Röhren eine innerhalb der anderen benachbarten Röhren ($3^1$, $3^2$, $3^n$) einwärts schraubt.

2. Stellantrieb nach Anspruch 1, dadurch gekennzeichnet, daß die Mutterbauteile zweiteilig gefertigt sind und dazwischen einen Zwischenraum zwischen zwei radialen, voneinander beabstandet gehaltenen Flanschen (17, 18) bilden, wobei im Zwischenraum ein Kranzstück (19) von einer der bewegbaren Röhren aufgenommen ist, so daß diese mit Bezug zum Mutterelement drehen kann.

3. Stellantrieb nach Anspruch 2, dadurch gekennzeichnet, daß reibungsmindernde Einrichtungen (20, 21) im Zwischenraum (16) an jeder Seite des Kranzstücks (19) angeordnet sind.

4. Stellantrieb nach einem der Ansprüche 2 oder 3, dadurch gekennzeichnet, daß die zwei Teile des Mutterbauteils Verbindungseinrichtungen (14, 15), vorzugsweise Gewinde (14, 15), haben, die miteinander zusammenwirken können und durch die die Bauteile (4^A, 4^B) für eine anschließende Befestigung verbunden werden können.

5. Stellantrieb nach einem der vorhergehenden Ansprüche, dadurch gekennzeichnet, daß einander benachbarte Röhren miteinander durch einen eine Drehung unterbindenden vorstehenden Paßstift, der an der einen der Röhren angebracht und in einer länglichen Nut an der anderen Röhre aufnehmbar ist, verbunden sind.

6. Stellantrieb nach einem der vorhergehenden Ansprüche, dadurch gekennzeichnet, daß die Welleneinrichtung vierseitige Rohre (8, 8^1) umfaßt, von denen eines innerhalb des anderen aufgenommen ist, und daß die Antriebswelle (9) antriebsseitig mit dem inneren der vierseitigen Rohre verbunden ist.

**Revendications**

1. Dispositif de commande linéaire pour un mouvement d'extension et de rétraction télescopique, comprenant:
   un certain nombre d'éléments tubulaires allongés (3, 3^1, 3^2, 3^n) qui sont mobiles axialement les uns par rapport aux autres et les uns dans les autres et comportent un moyen de filetage en regard de l'intérieur, l'un des éléments tubulaires fonctionnant en élément de réaction (3^n) qui est maintenu fixe et
   des éléments d'écrou (4, 4^1, 4^2), qui ont des éléments filetés (5) engagés dans le moyen de filetage de manière à étendre et respectivement contracter le dispositif de commande (1) par rotation d'un arbre d'entraînement (9) qui s'étend axialement au centre du dispositif de commande (1) et à travers une ouverture centrale (10, 13, 12) ménagée dans chaque élément d'écrou, où

chaque élément d'écrou (4, 4^1, 4^2) est associé en rotation avec une extrémité (3A, 3^1A, 3^2A) de l'élément tubulaire (tube) (3, 3^1, 3^2) qui dont être déplacé par rapport au tube adjacent (3^1, 3^2, 3^n), et
   l'arbre d'entraînement (9) est connecté de manière motrice aux éléments d'écrou tout en engageant partiellement le centre d'un dispositif à arbres télescopiques (8, 8^1), dont les arbres sont connectés à un élément d'écrou associé (4, 4^1),
   où la rotation de l'arbre d'entraînement (9) dans un sens visse tous les tubes mobiles (3, 3^1, 3^2) qui sont reliés aux éléments d'écrou (4, 4^1, 4^2) de façon simultanée dans la direction axiale de l'extérieur pour étendre le dispositif de commande et la rotation de l'arbre d'entraînement (9) dans la direction opposée provoque le vissage de tous ces éléments mobiles dans la direction de l'intérieur, l'un dans les autres tubes adjacents (3^1, 3^2, 3^n).

2. Dispositif de commande selon la revendication 1, caractérisé en ce que les éléments d'écrou sont constitués de deux parties formant entre elles un espace intermédiaire (16) entre deux flasques radiaux (17, 18) maintenus espacés l'un de l'autre, cet espace recevant une partie à rebord (19) de l'un des tubes mobiles de façon qu'il puisse tourner par rapport à l'élément d'écrou.

3. Dispositif de commande selon la revendication 2, caractérisé en ce que des moyens de réduction du frottement (20, 21) sont placés dans l'espace intermédiaire (16) de chaque côté de la partie à rebord (19).

4. Dispositif de commande selon l'une quelconque des revendiations 2 à 3, caractérisé en ce que les deux parties de l'élément d'écrou ont des moyens de connexion (14, 15), de préférence des filets (14, 15) qui peuvent agir mutuellement les uns avec les autres, au moyen desquels les parties (4^A, 4^B) peuvent être connectées ensemble, pour fixation par la suite.

5. Dispositif de commande selon l'une quelconque des revendications précédentes, caractérisé en ce que des tubes contigus sont reliés ensemble via une cannelure en saillie, empêchant la rotation, connectée à l'un des tubes et pouvant être reçue dans une clavette longitudinale de l'autre tube.

6. Dispositif de commande selon l'une quelconque des revendications précédentes, caractérisé en ce que le dispositif à arbres comprend des tubes à quatre côtés (8, 8^1) reçus l'un à l'intérieur de l'autre, et en ce que l'arbre d'entraînement (9) est relié de façon motrice au tube intérieur des tubes à quatre côtés.

Fig. 1

EP 0 140 951 B1

Fig. 2